# EUROPÄISCHE PATENTSCHRIFT

(11) **EP 2 705 258 B1**
(45) Veröffentlichungstag und Bekanntmachung des Hinweises auf die Patenterteilung: **27.06.2018**
(21) Anmeldenummer: 12717610.5
(22) Anmeldetag: 26.04.2012
(51) Int. Cl.: F15B 1/16, G01F 23/296, G01M 3/24

(54) **SENSORVORRICHTUNG ZUM DETEKTIEREN VON STRÖMUNGSFÄHIGEN MEDIEN, EINE DRUCKEINRICHTUNG UND EIN MESSVERFAHREN**
SENSOR DEVICE FOR DETECTING FLOWABLE MEDIA, A PRESSURE DEVICE AND A MEASURING METHOD
DISPOSITIF DE DÉTECTION POUR LA DÉTECTION DE FLUIDES, DISPOSITIF SOUS PRESSION ET PROCÉDÉ DE MESURE

(30) Priorität: 05.05.2011 DE 102011105813
(43) Veröffentlichungstag der Anmeldung: 12.03.2014
(73) Patentinhaber: Hydac Technology GmbH, 66280 Sulzbach/Saar (DE)
(72) Erfinder: JIRGAL, Matthias, Leo, 66126 Saarbrücken (DE)
(74) Vertreter: Bartels und Partner, Patentanwälte
(86) Internationale Anmeldenummer: PCT/EP2012/001789
(87) Internationale Veröffentlichungsnummer: WO 2012/150013

(56) Entgegenhaltungen:
- DE-A1- 2 631 061
- DE-A1- 2 912 618
- JP-A- 58 221 142
- US-A- 3 368 213
- US-A- 4 644 803
- US-A- 4 788 851

## Beschreibung

Die Erfindung betrifft eine Sensorvorrichtung zum Detektieren von strömungsfähigen Medien, insbesondere in Form von in Druckeinrichtungen, wie Druckbehältern oder Druckleitungen, aufnehmbaren Fluiden, mit den Merkmalen im Oberbegriff von Anspruch 1. Die Erfindung betrifft ferner eine Druckeinrichtung, insbesondere in Form eines Druckbehälters oder einer Druckleitung sowie ein Messverfahren zum Betrieb der Sensorvorrichtung in einer Druckeinrichtung.

Strömungsfähige Medien im Sinne der vorliegenden Erfindung werden häufig und insbesondere auch in der Antriebstechnik eingesetzt, beispielsweise als Schmier- und/oder Kühlmittel oder als Druckmittel in hydraulischen Anlagen zur Übertragung von Energien von einer Druckmittelquelle zu einem Verbraucher. Strömungsfähige Medien befinden sich hierbei in Druckeinrichtungen, wie Druckbehältern oder Druckleitungen. Insbesondere Druckbehälter können in solchen hydraulischen Anlagen verschiedenste Aufgaben erfüllen und beispielsweise der Energiespeicherung, der Bereitstellung einer Fluidreserve, der Notbetätigung von Verbrauchern, der Druckstoßdämpfung und dergleichen mehr dienen. Ein sicherer und ordnungsgemäßer Betrieb einer hydraulischen Anlage erfordert neben der Kenntnis von physikalischen Betriebsparametern, wie Druck oder Strömungsgeschwindigkeiten in den genannten Druckeinrichtungen, Informationen über die Qualität der strömungsfähigen Medien in der hydraulischen Anlage oder auch Informationen über das Vorhandensein strömungsfähiger Medien in Bereichen der genannten Druckeinrichtungen bzw. in Bereichen der hydraulischen Anlage.

Die DE 101 52 777 A1 beschreibt eine Vorrichtung zur Bestimmung der Qualität eines Mediums, insbesondere eines Schmier- und/oder Kühlmittels, mit mehreren Sensoren, die ein elektrisches Ausgangssignal in Abhängigkeit der jeweiligen sensorspezifischen Eingangsgröße abgeben, wobei ein Sensor ein Temperatursensor ist, der ein Ausgangssignal abgibt, das im Wesentlichen nur eine Abhängigkeit von der Temperatur des Mediums aufweist und insbesondere von der Qualität des Mediums im Wesentlichen unabhängig ist. Ein weiterer Sensor gibt ein Ausgangssignal ab, das sowohl von der Qualität des Mediums als auch von der Temperatur des Mediums abhängig ist. Die eingesetzten Sensoren sind auf einem gemeinsamen und in das jeweils zu untersuchende Medium eintauchbaren Substrat angeordnet. Die derart ausgestaltete Vorrichtung ermöglicht die Ermittlung qualitätsbestimmender Parameter von strömenden Medien unabhängig von deren aktuellen Temperatur.

Die DE 10 2009 010 775 A1 beschreibt eine Druckeinrichtung in Form eines Hydrospeichers zur Aufnahme mindestens eines Teilvolumens einer unter Druck stehenden Flüssigkeit, insbesondere einen hydropneumatischen Speicher, wobei der Hydrospeicher ein Gehäuse mit mindestens einer Anschlussstelle zum Anschließen des Hydrospeichers an eine Hydraulikeinrichtung aufweist. Ein Datenspeicher ist derart Bestandteil des Hydrospeichers, dass mittels eines außerhalb des Hydrospeichers angeordneten Lese- und/oder Schreibgerätes die in dem Datenspeicher gespeicherten Daten aus dem Datenspeicher elektronisch auslesbar sind. Der Betriebszustand des Hydrospeichers ist dadurch zuverlässig ermittel- und überwachbar, vorzugsweise auch automatisiert durchführbar und von einer Steuereinrichtung steuerbar.

Ist mit einer Sensorvorrichtung lediglich das Vorhandensein von strömungsfähigen Medien in Druckeinrichtungen von hydraulischen Anlagen und/oder die Art des vorhandenen strömungsfähigen Mediums zu detektieren, stellen diese bekannten Sensorvorrichtungen für diesen Einsatzzweck kostenintensive und aufwendige Lösungen dar.

Durch die DE 35 00 098 A1 ist eine Sensorvorrichtung aufgezeigt zum Detektieren von strömungsfähigen Medien, insbesondere in Form von in Druckeinrichtungen, wie Druckbehältern oder Druckleitungen, aufnehmbaren Fluiden, mit zumindest einem Sensorelement, das eine Schwingungseinrichtung aufweist, die unter der Einwirkung eines Magnetfeldes einer Felderzeugungseinrichtung zu Schwingungen angeregt wird, deren Schwingungsverhalten bei Zutritt des jeweiligen Mediums sich ändert, und dass die Änderung von einer Messeinrichtung erfassbar ist, wobei die Felderzeugungseinrichtung durch eine Magneteinrichtung und die Messeinrichtung durch mindestens eine elektromagnetische Spule gebildet sind, deren magnetischer Fluss nebst einer elektrischen Spannung in der Spule bei angeregtem Sensorelement durch dessen Schwingungen beeinflusst ist.

Eine ähnliche Lösung ist in der US 3 368 213 A aufgezeigt, die eine gattungsgemäße Sensorvorrichtung zur Detektion des Flüssigkeitspegels in einem Reservoir offenbart. Bei der bekannten Lösung weist sowohl die Felderzeugungseinrichtung als auch die Messeinrichtung jeweils eine separate elektromagnetische Spule auf. Als Schwingungseinrichtung wird eine flexible, plättchenförmige Metallzunge vorgeschlagen, die nach ihrer Auslenkung aus der Ruhelage mittels der Felderzeugungseinrichtung für Vibrationen bei ihrer Resonanzfrequenz geeignet ist. Als für die Schwingungseinrichtung geeignetes Material wird ein kohlenstoffreicher Stahl angegeben, der neben seiner Eignung zur Vibration auch unempfindlich gegenüber den Temperaturen der zu detektierenden Flüssigkeit ist.

Die bekannte Lösung baut kompliziert auf und ist mithin teuer und schwierig herstellbar.

Ausgehend von diesem Stand der Technik liegt der Erfindung die Aufgabe zugrunde, eine Sensorvorrichtung zum Detektieren von strömungsfähigen Medien, insbesondere in Form von in Druckeinrichtungen, wie Druckbehältern oder Druckleitungen, aufnehmbaren Fluiden, anzugeben, die kostengünstig und einfach herstellbar ist und sicher im Betrieb ist. Der vorliegenden Erfindung liegt auch die Aufgabe zugrunde, eine Druckeinrichtung, insbesondere in Form eines Druckbehälters oder einer Druckleitung, anzugeben, die mit einer Sensorvorrichtung zum Detektieren von strömungsfähigen Medien ausgestattet ist und deren Aufbau kostengünstig, einfach und robust ist. Der Erfindung liegt weiter die Aufgabe zugrunde, ein geeignetes Messverfahren zur Verfügung zu stellen.

Diese Aufgaben sind durch die in Anspruch 1 bestimmte Sensorvorrichtung und durch eine im nebengeordneten Anspruch bestimmte Druckeinrichtung, sowie nach einem weiteren unabhängigen Anspruch durch ein Messverfahren zum Betrieb der Sensorvorrichtung, gelöst.

Erfindungsgemäß ist vorgesehen, dass die Schwingungseinrichtung des Sensorelements in der Art eines Reed-Schalters oder Reed-Kontaktes ausgebildet ist, wobei der Reed-Schalter oder Reed-Kontakt aus zumindest zwei federnden Metallzungen gebildet ist, die mit abnehmender Feldstärke der Magneteinrichtung sich voneinander wegbewegen und dergestalt zu Schwingungen angeregt werden, wobei zumindest eine Schwingungskenngröße, die über die Mess- und Auswerteeinrichtung erfassbar ist, sich bei Zutritt des Mediums ändert. Die Mess- und Auswerteeinrichtung erfasst in einem besonders bevorzugten Ausführungsbeispiel der Sensorvorrichtung die absolute Schwingungsanzahl des Sensorelements oder die Schwingungsanzahl des Sensorelements oberhalb eines vorzugsweise in Abhängigkeit des zu detektierenden Mediums vorgebbaren Schwellenwertes einer Schwingungsamplitude.

Dahingehende Reed-Schalter können als Standardbauteile auf dem Markt kostengünstig erworben werden und aufgrund ihres konstruktiv einfachen Aufbaus lässt sich eine sehr gute Kalibrierung und Messwerteeinstellung für Messwertaufgaben mittels der jeweiligen Reed-Einrichtung erreichen. Des Weiteren baut die dahingehende erfindungsgemäße Reed-Einrichtung kompakt auf und lässt sich dergestalt auch bei den beengtesten Einbauverhältnissen für Messaufgaben ohne weiteres unterbringen.

Reed-Schalter und Reed-Kontakte weisen vorzugsweise zwei Kontaktzungen auf, die von einer vorzugsweise in Form von Glas gebildeten Umhüllung umgeben, zugleich Kontaktfedern und eine Art Magnetanker bilden. Die Kontaktbetätigung der Kontaktzungen erfolgt durch ein von außen einwirkendes Magnetfeld, das von einem in die Nähe gebrachten Dauermagneten (Reed-Kontakt) oder in einer zugehörigen Magnetspule (Reed-Schalter) elektrisch erzeugt wird. Durch die Wirkung des Magnetfeldes ziehen sich die beiden Kontaktzungen an. Sobald das Magnetfeld abfällt oder eine bestimmte Feldstärke unterschreitet, öffnet sich der dahingehende Kontakt der Kontaktzungen aufgrund deren Federwirkung wieder. Die Kontaktzungen können dabei eine freie Schwingung ausführen. Die in der Nähe der Kontaktzungen angeordnete elektromagnetische Spule bzw. deren Magnetfeld wird durch die Kontaktzungen moduliert und dadurch eine Signalspannung in derselben Spule erzeugt.

In einem besonders bevorzugten Ausführungsbeispiel ist der jeweilige Reed-Schalter oder Reed-Kontakt aus weichmagnetischen Metallzungen gebildet.

Die Messeinrichtung ist mit der Auswerteeinrichtung vorzugsweise über eine Datenübertragungstrecke verbunden, die beispielsweise aus einer Kabel- oder Funkverbindung gebildet sein kann. Vorzugsweise ist die Auswerteeinrichtung außerhalb der Druckeinrichtung angeordnet, um beispielsweise auf einfache Weise mit einer von außen her einsehbaren Anzeigeeinrichtung verbunden zu werden. Unter einer Funkverbindung sei hier insbesondere eine Verbindung durch elektromagnetische Wellen der Messeinrichtung mit der Auswerteeinrichtung verstanden.

Das jeweilige Sensorelement weist eine Schwingungseinrichtung auf, die unter der Einwirkung eines Feldes einer Felderzeugungseinrichtung zu Schwingungen angeregt wird, deren Schwingungsverhalten bei Zutritt des jeweiligen zu detektierenden Mediums sich ändert, wobei diese Änderung für eine sich anschließende Auswertung von einer Messeinrichtung erfassbar ist. Dadurch ist vorteilhaft bewirkt, dass vorzugsweise in jedweder Bauart einer Druckeinrichtung das Vorhandensein und die Art eines strömungsfähigen Mediums auf einfache Weise ermöglicht sind. Das Detektieren von strömungsfähigen Medien kann hierbei insbesondere als Voraussetzung für die Anwendung von Sicherheitsfunktionen oder das Steuern von Betriebsabläufen auch in komplex aufgebauten Druckeinrichtungen angewandt sein. Erfindungsgemäß sind die Felderzeugungseinrichtung durch eine Magneteinrichtung und die Messeinrichtung durch mindestens eine elektromagnetische Spule gebildet, deren magnetischer Fluss nebst einer elektrischen Spannung in der Spule bei angeregtem Sensorelement durch dessen Schwingungen beeinflusst ist. Vorzugsweise verhält sich das Sensorelement hierbei wie ein mechanischer Schwinger. Ein mechanischer Schwinger ist dadurch definiert, dass dieser durch Energiezufuhr aus einem statischen Gleichgewicht gebracht und danach für den Erhalt mindestens einer Schwingung, vorzugsweise für den Erhalt einer Vielzahl an Schwingungen, freigegeben wird.

Durch den dadurch initiierten Schwingungsvorgang findet fortlaufend eine Energieumwandlung statt.

In einem besonders bevorzugten Ausführungsbeispiel der Sensorvorrichtung sind die Felderzeugungseinrichtung und die Messeinrichtung in einem Bauteil zusammengefasst, vorzugsweise in Form der elektromagnetischen Spule. Auf diese Weise ist eine besonders kompakte und kostengünstig bauende Sensorvorrichtung ermöglicht, die auch in kleinsten Druckeinrichtungen eingebracht und dort zur Detektion von strömungsfähigen Medien herangezogen werden kann. Die elektromagnetische Spule dient somit sowohl als Aktor als auch als Sensor, indem diese zum einen das Sensorelement zu Schwingungen anregt und zum anderen von dem Sensorelement eine Signalspannung in derselben elektromagnetischen Spule induziert wird, aufgrund der Modulation des elektromagnetischen Feldes der elektromagnetischen Spule durch das Sensorelement.

Um das strömungsfähige, zu detektierende Medium an das Sensorelement gelangen zu lassen, weist das Sensorelement eine Umhüllung, vorzugsweise aus einem Kunststoff oder Glaswerkstoff auf, in die mindestens eine Öffnung für den Zutritt des strömungsfähigen Mediums eingebracht ist. Es genügt, eine einzige Öffnung in der Umhüllung des Sensorelements vorzusehen, vorzugsweise sind jedoch mindestens zwei Öffnungen vorhanden. Die jeweilige Öffnung ist vorzugsweise dergestalt gebildet, dass sich eine Kapillarwirkung auf das strömungsfähige Medium ergibt, durch die das strömungsfähige Medium durch die Öffnung ins Innere der Umhüllung und in Richtung auf das Sensorelement gesogen wird.

Die Energie für den Betrieb des Sensorelements und/oder der Messeinrichtung stammt vorzugsweise von einer elektrischen Energiequelle, wie einem Akkumulator, beispielsweise in Form einer Batterie, oder ist durch eine induktive Kopplung des Sensorelements und der Messeinrichtung mit einer Energiequelle der Auswerteeinrichtung oder aus einer Energie des Mediums innerhalb der Druckeinrichtung gewonnen. Hierbei kann die Differenz von elektrischen Potentialen, von Temperaturunterschieden, von der Relativgeschwindigkeit zwischen Sensorelement und strömendem Medium herangezogen werden, oder Energie kann aus Druckschwankungen in dem Medium gewonnen werden. Die Zuleitung elektrischer Energie von einer elektrischen Energiequelle zu dem Sensorelement und/oder der Messeinrichtung kann über eine elektrische Zuleitung erfolgen, die auch als einpolige Zuleitung ausgeführt sein kann, sofern die Einrichtung als zweite Elektrode verwendet wird. Die Bereitstellung von Energie für den Betrieb des Sensorelements und/oder der Messeinrichtung aus Temperaturunterschieden des zu detektierenden strömungsfähigen Mediums erfolgt vorzugsweise unter Ausnutzung des SEEBECK-Effekts, beispielsweise unter Verwendung eines thermoelektrischen Generators.

Mittels einer erfindungsgemäßen Sensorvorrichtung kann in einer Druckeinrichtung, insbesondere in Form eines Druckbehälters oder einer Druckleitung mindestens ein in der Druckeinrichtung befindliches strömungsfähiges Medium detektiert werden oder ein Fehlen eines solchen strömungsfähigen Mediums festgestellt werden. Gemäß der erfindungsgemäßen Sensorvorrichtung lässt sich auch ein in einem Mediengemisch (Lösung, Suspension) vorhandenes Medium und/oder zumindest eine Medienströmung detektieren. Dabei kann die jeweilige Druckeinrichtung auch drucklos gehalten oder mit einem Vakuum beaufschlagt sein.

Eine Auswerteeinrichtung der Sensorvorrichtung kann hierbei an dem Sensorelement der Druckeinrichtung angeordnet sein. Es ist vorteilhaft, die Auswerteeinrichtung außerhalb der Druckeinrichtung anzuordnen und mit Hilfe einer Datenübertragungstrecke der Sensorvorrichtung, vorzugsweise in Form einer Kabel- oder Funkverbindung mit dem Sensorelement zu verbinden. Als Kabelverbindung eignet sich eine ein- oder mehrpolige Kabelverbindung. Gleichwohl kann es vorteilhaft sein, eine kabellose Datenübertragungstrecke in Form einer Funkverbindung etwa mit Hilfe einer Datenübertragung durch Radiowellen, beispielsweise mit einer Frequenz von mehr als 100 MHz zu wählen. Dadurch ergeben sich Reichweiten von mehreren Metern bei entsprechender Sendeleistung und/oder geeigneten Frequenzbereichen.

Für den Einsatz der Sensorvorrichtung kann eine Druckeinrichtung in Form eines Hydrospeichers beispielsweise in Form eines Balgspeichers, eines Membranspeichers, eines Kolbenspeichers oder eines Blasenspeichers mit mindestens einem, im Speichergehäuse des Hydrospeichers angeordneten und vorzugsweise bewegbaren Trennelement vorgesehen sein, wobei das Trennelement innerhalb des Speichergehäuses zwei benachbart angeordnete Medienräume mit unterschiedlichen Medien voneinander trennt.

Die Sensorvorrichtung ist dann in mindestens einem Medienraum des Speichers angeordnet, um damit einen ungewollten Medieneintritt in diesen Raum zu erfassen, was regelmäßig einen Hinweis über den aktuellen Betriebszustand des Hydrospeichers ergibt, beispielsweise indem festgestellt wird, dass das Trennelement eine Versagensstelle in Form eines Risses, Bruches od. dgl. aufweist, mit der Folge, dass das eine Medium (Hydrauliköl) aus seinem angestammten Medienraum in den über das Trennelement separierten anderen Medienraum mit seinem Medium (Stickstoffgas) eintritt und dergestalt das Arbeits- und Energiespeichervermögen beeinträchtigt, was im Einzelfall auch zum vollständigen Ausfall des Hydrospeichers führen kann.

Ein dahingehender Versagensfall wird dann über die Auswerteeinrichtung beispielsweise einem Wartungs- oder Betriebspersonal zum Einleiten entsprechender Maßnahmen, wie Reparatur oder Austausch des Hydrospeichers, gemeldet. In Abhängigkeit von der Baugröße des eingesetzten mechanischen Schwingers lassen sich auch kleinste Mengen von ungewollt eindringenden Fremdmedien in dem separierten Medienraum mit dem anderen Medium sicher detektieren. Eine ständige Überwachung des Funktionszustandes einer Druckeinrichtung mit Hilfe der erfindungsgemäßen Sensorvorrichtung ist dadurch ohne weiteres möglich.

Ein erfindungsgemäßes Messverfahren zum Betrieb der erfindungsgemäßen Sensorvorrichtung weist in einem besonders vorteilhaften Ausführungsbeispiel eine Sollwert-Kompensation auf, beispielsweise durch die Mess- und Auswerteeinrichtung durchgeführt, wobei die Sollwert-Kompensation einen aktuellen Druck in dem Medienraum, in dem das Sensorelement angebracht ist, und eine aktuelle Temperatur in zumindest einem der Medienräume mit berücksichtigt, was die Verlässlichkeit des Verfahrens verbessert.

Nachstehend ist die Erfindung anhand eines in der Zeichnung dargestellten Ausführungsbeispiels im Einzelnen erläutert. Es zeigen:
- Fig. 1: eine Prinzipdarstellung eines Ausführungsbeispiels einer erfindungsgemäßen Sensorvorrichtung nebst Auswerteeinrichtung;
- Fig. 2: den Verlauf zweier Schwingungskenngrößen bei der Detektion eines strömungsfähigen Mediums mit Hilfe der Sensorvorrichtung in Fig. 1; und
- Fig. 3: eine schematische, nicht maßstäbliche Längsschnitt-Darstellung einer Druckeinrichtung in Form eines als Membranspeicher gebildeten Hydrospeichers.

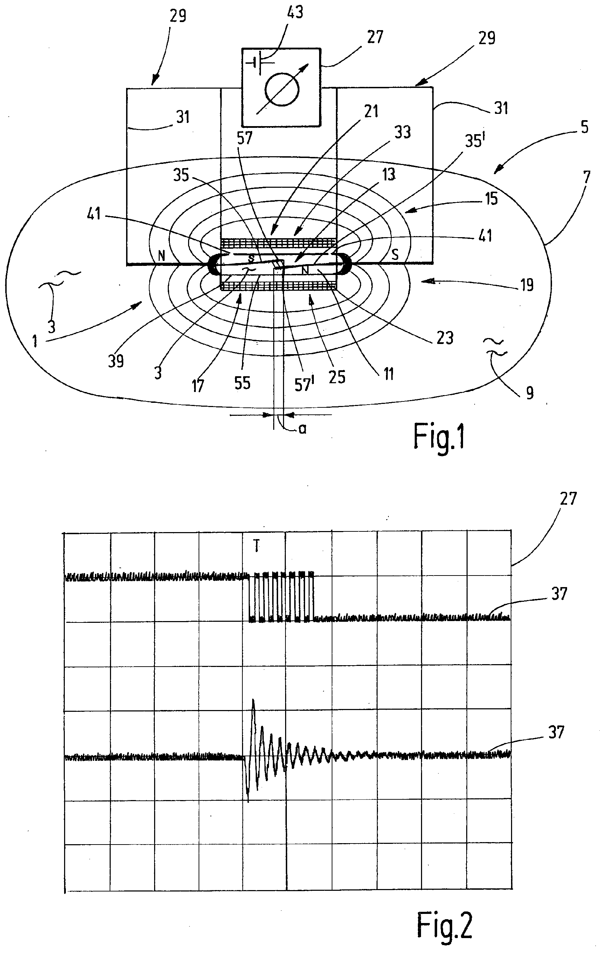

In Fig. 1 ist in der Art einer Prinzipdarstellung eine Sensorvorrichtung 1 zum Detektieren von strömungsfähigen Medien 3, insbesondere in Form von in Druckeinrichtungen 5, wie Druckbehältern 7 oder Druckleitungen aufnehmbaren Fluiden 9, mit zumindest einem Sensorelement 11 gezeigt. Das Sensorelement 11 weist eine Schwingungseinrichtung 13 auf, die unter der Einwirkung eines Feldes 15 einer Felderzeugungseinrichtung 17 zu Schwingungen angeregt wird (vgl. Fig. 2). Das Schwingungsverhalten der Schwingungseinrichtung 13 ändert sich hierbei bei Zutritt des jeweiligen strömungsfähigen Mediums 3, wobei die Änderung des Schwingungsverhaltens der Schwingungseinrichtung 13 von einer Messeinrichtung 19 erfasst ist. In dem in Fig. 1 gezeigten Ausführungsbeispiel der erfindungsgemäßen Sensorvorrichtung 1 ist die Felderzeugungseinrichtung 17 durch eine Magneteinrichtung 21 und die Messeinrichtung 19 durch mindestens eine elektromagnetische Spule 23 gebildet, wobei der magnetische Fluss der elektromagnetischen Spule 23 und eine elektrische Spannung in der Spule 23 durch Schwingungen des von der elektromagnetischen Spule 23 angeregten Sensorelements 11 beeinflusst wird.

Wie insbesondere die Fig. 1 zeigt, ist in einem besonders bevorzugten Ausführungsbeispiel der Sensorvorrichtung die Felderzeugungseinrichtung 17 und die Messeinrichtung 19 in einem Bauteil 25, hier in Form der elektromagnetischen Spule 23, zusammengefasst.

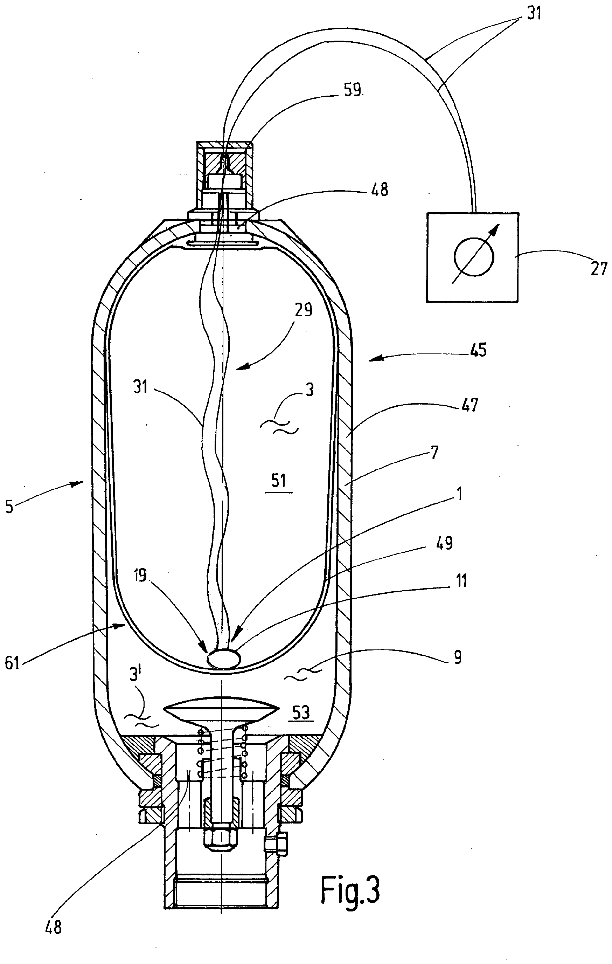

Wie die Fig. 1 und 3 lediglich beispielhaft zeigen, ist die Messeinrichtung 19 mit einer Auswerteeinrichtung 27 über eine Datenübertragungsstrecke 29 verbunden. Die Datenübertragungsstrecke 29 ist in den gezeigten Ausführungsbeispielen in Form einer Kabelverbindung 31 zwischen der Messeinrichtung 19 und der Auswerteeinrichtung 27 gebildet. In Fig. 3 ist eine Kabelverbindung 31 mit zumindest einem zweipoligen Kabel dargestellt. Die Auswerteeinrichtung 27 ist in dem in Fig. 3 gezeigten Ausführungseispiels außerhalb der Druckeinrichtung 5 angeordnet.

Fig. 1 zeigt die Schwingungseinrichtung 13 in der Art eines Reed-Schalters 33 ausgebildet. Der Reed-Schalter 33 weist in dem in Fig. 1 gezeigten Ausführungsbeispiel zwei weichmagnetische, federnde Metallzungen 35, 35' auf, die sich in dem Sensorelement 11 diametral gegenüberliegen und deren Enden 57, 57' sich axial mit einem Längenmaß a überlappen. In dem in Fig. 1 gezeigten Ausführungsbeispiel berühren sich die Enden 57, 57' der Metallzungen 35, 35' nicht. Radial sind die Metallzungen 35, 35' von der als elektromagnetische Spule 23 gebildeten Magneteinrichtung 21 im Wesentlichen über ihre ganze Länge umschlossen. Wird die elektromagnetische Spule 23 bestromt, so ergibt sich ein magnetisches Feld 15, das in Fig. 1 lediglich schematisch dargestellt ist, wobei bei zunehmender Feldstärke die Metallzungen 35, 35' sich aufeinander zubewegen. Die Metallzungen 35, 35' können sich hierbei auch in Abhängigkeit von der Feldstärke des magnetischen Feldes 15 berühren. Bei wiederum abnehmender Feldstärke der Magneteinrichtung 21 bewegen sich die Metallzungen 35, 35' voneinander weg und werden zu Schwingungen angeregt. Die Bestromung der elektromagnetischen Spule 23 kann auch ganz unterbrochen werden, um den dahingehenden Schwingungsvorgang der Metallzungen 35, 35' zu initiieren. Anstatt der Anwendung einer elektromagnetischen Spule 23 kann als Magneteinrichtung 21 auch ein Permanentmagnet zur Anwendung kommen. Um einen Schwingungsvorgang der Metallzungen 35, 35' zu initiieren wird der Permanentmagnet beispielsweise in Richtung auf das Sensorelement 11 bewegt, so lange, bis die Metallzungen 35, 35' sich vorzugsweise berühren. Anschließend wird der Permanentmagnet von dem Sensorelement 11 wegbewegt, so dass sich die Wirkung des elektromagnetischen Feldes des Permanentmagneten auf das Sensorelement 11 insoweit verringert und die Metallzungen 35, 35' sich voneinander lösen und vorzugsweise eine freie Schwingung ausüben. Somit ist ein Reed-Kontakt geschaffen. Eine oder mehrere Schwingungskenngrößen der freien Schwingung der Metallzungen 35, 35' können von der Auswerteeinrichtung 27 erfasst werden. Der Reed-Schalter 33 oder auch der Reed-Kontakt können sich somit wie ein mechanischer Schwinger 55 verhalten.

Wie Fig. 2 zeigt, kann hierbei eine Schwingungskenngröße 37 oder auch mehrere Schwingungskenngrößen über die Mess- und Auswerteeinrichtung 19, 27 erfasst werden. Fig. 2 zeigt zwei Kurvenverläufe, wobei der obere Kurvenverlauf in Betrachtungsrichtung der Fig. 2 eine Schwingungsanzahl des Sensorelements 11 oberhalb eines vorgebbaren Schwellenwertes einer Schwingungsamplitude zeigt. Die in Betrachtungsrichtung in Fig. 2 untere Kurve zeigt hingegen ein Beispiel der Auftragung der absoluten Schwingungsanzahl des Sensorelements 11 über die Zeit. Wie Fig. 1 ferner zeigt, weist das Sensorelement 11 eine Umhüllung 39 auf, die vorzugsweise aus einem mineralischen Glaswerkstoff gebildet ist, wobei die Umhüllung 39 die Metallzungen 35, 35' radial und axial vollkommen umschließt, unter Einhaltung eines radialen Mindestabstands zu den Metallzungen 35, 35'. Die dahingehende Umhüllung 39 weist zwei Öffnungen 41 für den Medienzutritt an die Metallzunge 35, 35' auf. Die Öffnungen 41 können axial und radial mit Abstand in die Umhüllung 39 eingebracht sein. Die Schwingungskenngröße 37 ändert sich bei Zutritt des jeweiligen Mediums 3, 3' in charakteristischer Weise. Dadurch ist auf besonders einfache und kostengünstige Weise die Detektion eines strömungsfähigen Mediums 3 mit Hilfe der Sensorvorrichtung 1 ermöglicht. Die Detektion umfasst hier mindestens die Erkennung der Art des strömungsfähigen Mediums 3, 3'.

Die Sensorvorrichtung 1 ist prinzipiell so aufgebaut, dass sie auch nach Medienzutritt ins Innere der Umhüllung 39 wiederverwendbar ist. Aufgrund der einfachen Bauweise lässt sich das Sensorelement 11 sehr kostengünstig herstellen und daher auch als lediglich einmal zu verwendendes Sensorelement 11 anwenden, das sich nach einem Medienzutritt in die Umhüllung 39 ersetzen lässt.

Die Energie für den Betrieb des Sensorelements 11 und der Messeinrichtung 19 wird von einer elektrischen Energiequelle 43 in Form eines nicht näher dargestellten Akkumulators bereitgestellt. Bei einer Ausführungsform der Datenübertragungsstrecke 29 in Form einer Funkverbindung kann die Energie für den Betrieb des Sensorelements 11 und auch der Messeinrichtung 19 durch eine induktive Koppelung des Sensorelementes 11 und der Messeinrichtung 19 mit einer Energiequelle der Auswerteeinrichtung 27 oder aus einer Energie des Mediums 3, innerhalb der Druckeinrichtung 5, etwa aus einer Differenz von elektrischen Potenzialen, aus Temperaturunterschieden in dem Medium 3, aus der Relativgeschwindigkeit zwischen dem Sensorelement 11 und einem strömenden Medium 3, oder aus Druckschwankungen in dem Medium 3 gewonnen werden.

In Druckeinrichtungen 5, wie in dem in Fig. 3 gezeigten Druckbehälter 7 oder auch in einer Druckleitung lässt sich mittels der Sensorvorrichtung 1 der jeweiligen Druckeinrichtung 5 zumindest ein in der Druckeinrichtung 5 befindliches Medium 3 detektieren. Mit der Sensorvorrichtung 1 kann auch festgestellt werden, ob überhaupt ein strömungsfähiges Medium 3 sich in der Druckeinrichtung 5 befindet. Ferner lässt sich mit der Sensorvorrichtung 1 feststellen, ob ein Medium 3 in einem Mediengemisch vorhanden ist, oder es lässt sich mit Hilfe der Sensorvorrichtung 1 das Vorhandensein einer Medienströmung in einer Druckeinrichtung 5 detektieren. Somit lässt sich beispielsweise auch der Füllungsgrad eines Druckbehälters 7 und allgemein die Art einer Betriebsphase einer dahingehenden Druckeinrichtung 5 (ruhendes Medium oder bewegtes Medium) feststellen. Die Detektion von strömungsfähigen Medien kann hierbei einen Vergleich zwischen der aktuell ermittelten Schwingungskenngröße 37 und einer Anzahl an in einem Speicher der Auswerteeinrichtung 27 abgelegten, für verschiedene Medien 3, 3' jeweils charakteristischen Schwingungskenngrößen beinhalten.

In Fig.3 ist eine Druckeinrichtung 5 in Form eines Hydrospeichers 45 dargestellt. Der Hydrospeicher 45 ist als Blasenspeicher gebildet und dient der Speicherung von flüssigen oder gasförmigen Medien 3, 3', die unter einem Druck von bis etwa 600 bar stehen können. Ein Speichergehäuse 47 des Hydrospeichers 45 ist an beiden Enden mit Anschlussöffnungen 48 für eine Medienzu- und -abfuhr versehen, an die jeweils Ventile angeschlossen sind. Der Hydrospeicher 45 ist im Wesentlichen rotationssymmetrisch ausgebildet und erstreckt sich entlang seiner Längsachse. Der Hydrospeicher 45 weist einen Medienraum51 auf, der durch ein Trennelement 49 in Form einer, aus einem elastomeren Material gebildeten Speicherblase 61 von einem weiteren Medienraum53getrennt ist. In dem Medienraum 51 im Inneren der Speicherblase 61 befindet sich ein unter Druck stehendes Arbeitsgas. In dem Medienraum 53 außerhalb der Speicherblase 61 befindet sich beispielsweise ein Hydraulikmedium, wie Öl, das von einem hydraulischen Kreislauf zugeführt und von dem Medienraum 53 wieder abgerufen werden kann. Auf Einzelheiten des Aufbaus des in Fig.3 gezeigten Druckbehälters 7 wird an dieser Stelle nicht näher eingegangen, da der Druckbehälter 7 bereits in einer Voranmeldung der Anmelderin (DE 10 2006 004 120 A1) näher beschrieben ist.

Bei dem in Fig. 3 gezeigten Ausführungsbeispiel einer Druckeinrichtung 5 bzw. des Druckbehälters 7 ist die Auswerteeinrichtung 27 der Sensorvorrichtung 1 außerhalb der Druckeinrichtung 5 vorhanden. Die in Form der Kabelverbindung 31 gebildete Datenübertragungsstrecke 29 zwischen der Auswerteeinrichtung 27 und dem Sensorelement 11 ist durch ein Zuführventil 59 geführt. Wie gezeigt, befindet sich das Sensorelement 11 in einem von einem als Speicherblase 61 gebildeten Trennelement 49 geschlossenen Medienraum 51 und ist in dem Medienraum 51 aufgrund einer Überlänge der Kabelverbindung 31 in jedweder Betriebsphase der Druckeinrichtung 5 an jede Stelle innerhalb des Medienraums 51 bewegbar. Die Auswerteeinrichtung 27 kann eine Ausgabeeinheit aufweisen, die auf einer optischen, einer akustischen oder einer haptischen Funktionsweise basiert, und ist insbesondere in der Lage, einem Wartungs- oder Betriebspersonal für die dahingehende Druckeinrichtung 5 einen ungewollten Medieneintritt eines Mediums 3' aus einem Medienraum 53 zu melden.

Die gezeigte Mess- und Auswerteeinrichtung 19, 27 ist in der Lage, eine Sollwertkompensation durchzuführen, die einen aktuellen Druck in dem Medienraum 51, in dem sich das Sensorelement 11 befindet, und eine aktuelle Temperatur in zumindest einem der Medienräume 51, 53 zu berücksichtigen. Mit Hilfe der Sensorvorrichtung 1 nebst Mess- und Auswerteeinrichtung 19, 27 lässt sich somit die Dichtheit einer Speicherblase 61 eines Blasenspeichers vorzugsweise ständig über dessen gesamte Lebensdauer feststellen. Die Sensorvorrichtung 1 und insbesondere das Sensorelement 11 sind in der Lage, schon kleinste Medienübertritte von dem Medienraum 53 außerhalb der Speicherblase 61 in den Medienraum 51 innerhalb der Speicherblase 61 zu detektieren. Beispielsweise ist dadurch der Eintritt eines Hydrauliköls oder anderer Stoffe aus dem Medienraum 53 durch eine Versagensstelle in der Speicherblase 61 und in den Medienraum 51 schon bei sehr kleinen Medienvolumina detektierbar.

## Patentansprüche

1. Sensorvorrichtung zum Detektieren von strömungsfähigen Medien (3, 3'), insbesondere in Form von in Druckeinrichtungen (5), wie Druckbehältern (7) oder Druckleitungen, aufnehmbaren Fluiden (9), mit zumindest einem Sensorelement (11), das eine Schwingungseinrichtung (13) aufweist, die unter der Einwirkung eines Magnetfeldes (15) einer Felderzeugungseinrichtung (17) zu Schwingungen angeregt wird, und deren Schwingungsverhalten sich bei Zutritt des jeweiligen Mediums (3) ändert, wobei die Änderung von einer Mess- und Auswerteeinrichtung (19, 27) erfassbar ist, wobei die Felderzeugungseinrichtung (17) durch eine Magneteinrichtung (21) und die Messeinrichtung (19) durch mindestens eine elektromagnetische Spule (23) gebildet sind, deren magnetischer Fluss nebst einer elektrischen Spannung in der Spule (23) bei angeregtem Sensorelement (11) durch dessen Schwingungen beeinflusst ist, und wobei die Schwingungseinrichtung eine Metallzunge aufweist, **dadurch gekennzeichnet, dass** die Schwingungseinrichtung (13) des Sensorelements (11) in der Art eines Reed-Schalters (33) oder Reed-Kontaktes ausgebildet ist, wobei der Reed-Schalter (33) oder Reed-Kontakt aus zumindest zwei federnden Metallzungen (35, 35') gebildet ist, die mit abnehmender Feldstärke der Magneteinrichtung (21) sich voneinander wegbewegen und dergestalt zu Schwingungen angeregt werden, wobei zumindest eine Schwingungskenngröße, die über die Mess- und Auswerteeinrichtung (19, 27) erfassbar ist, sich bei Zutritt des Mediums (3, 3') ändert.

2. Sensorvorrichtung nach Anspruch 1, **dadurch gekennzeichnet, dass** die federnden Metallzungen (35, 35') weichmagnetisch sind.

3. Sensorvorrichtung nach Anspruch 1 oder 2, **dadurch gekennzeichnet, dass** die Messeinrichtung (19) mit der Auswerteeinrichtung (27) über eine Datenübertragungstrecke (29) in Verbindung steht, vorzugsweise über eine Kabel- oder Funkverbindung (31).

4. Sensorvorrichtung nach einem der vorhergehenden Ansprüche, **dadurch gekennzeichnet, dass** die Mess- und Auswerteeinrichtung (19, 27) die von dem Sensorelement (11) ermittelte Schwingungsamplitude und/oder Schwingungsanzahl oberhalb eines vorzugsweise in Abhängigkeit des zu detektierenden Mediums (3, 3') vorgebbaren Schwellenwertes einer Schwingungsamplitude erfasst.

5. Sensorvorrichtung nach einem der vorhergehenden Ansprüche, **dadurch gekennzeichnet, dass** das Sensorelement (11) eine Umhüllung (39), vorzugsweise aus einem Kunststoff- oder Glaswerkstoff, mit mindestens einer Öffnung (41) für den Medienzutritt aufweist.

6. Sensorvorrichtung nach einem der vorhergehenden Ansprüche, **dadurch gekennzeichnet, dass** die Energie für den Betrieb des Sensorelements (11) und/oder der Messeinrichtung (19)
- von einer elektrischen Energiequelle (43), wie einem Akkumulator, beispielsweise in Form einer Batterie oder
- durch eine induktive Kopplung des Sensorelements (11) und der Messeinrichtung (19) mit einer Energiequelle der Auswerteeinrichtung (27) oder
- aus einer Energie des Mediums (3) innerhalb der Druckeinrichtung (5), wie aus einer Differenz von elektrischen Potentialen, aus Temperaturunterschieden, aus der Relativgeschwindigkeit zwischen Sensorelement (11) und strömendem Medium (3), oder aus Druckschwankungen in dem Medium (3) gewonnen ist.

7. Druckeinrichtung, insbesondere in Form eines Druckbehälters (7) oder einer Druckleitung, mit einer Sensorvorrichtung (1) nach einem der vorhergehenden Ansprüche in der Druckeinrichtung, wobei mittels der Sensorvorrichtung (1)
- mindestens ein in der Druckeinrichtung befindliches Medium (3) oder kein solches Medium (3) oder
- zumindest ein in einem Mediengemisch, insbesondere einer Lösung oder Suspension, vorhandenes Medium (3) und/oder
- zumindest eine Medienströmung
detektierbar ist.

8. Druckeinrichtung nach Anspruch 7, **dadurch gekennzeichnet, dass** die Auswerteeinrichtung (27) der Sensorvorrichtung (1) an dem Sensorelement (11) und/oder außerhalb der Druckeinrichtung (5) angeordnet ist, und dass die Auswerteeinrichtung (27) mit Hilfe einer Datenübertragungstrecke (29) der Sensorvorrichtung (1), vorzugsweise in Form einer Kabel- oder Funkverbindung (31), mit deren Sensorelement (11) verbunden ist.

9. Druckeinrichtung nach Anspruch 7 oder 8 in Form eines als Hydrospeicher (45), insbesondere als Balgspeicher, Membranspeicher, Kolbenspeicher oder Blasenspeicher ausgebildeten Druckbehälters (7) mit mindestens einem im Speichergehäuse (47) angeordneten und vorzugsweise bewegbaren Trennelement (49), das innerhalb des Speichergehäuses (47) zwei benachbart angeordnete Medienräume (51, 53) mit unterschiedlichen Medien (3, 3') voneinander trennt, wobei bei einem ungewollten Medieneintritt mindestens eines der Medien (3, 3') in den jeweils anderen Medienraum (51, 53) die Sensorvorrichtung (1) dies erfasst und über die Auswerteeinrichtung (27) insbesondere einem Wartungs- oder Betriebspersonal meldet.

10. Messverfahren zum Betrieb der Sensorvorrichtung in einer Druckeinrichtung nach einem der Ansprüche 7 bis 9, **dadurch gekennzeichnet, dass** der Reed-Schalter (33) der Sensorvorrichtung (1) unter der Einwirkung des Magnetfeldes (15) der Felderzeugungseinrichtung (17) sich als mechanischer Schwinger (55) verhält, dessen Schwingungsverhalten sich bei Zutritt des jeweiligen Mediums (3, 3') ändert und die Änderung von der Messeinrichtung (19) erfasst wird, die zur weiteren Auswertung ihre Messdaten an die Auswerteeinrichtung (27) weitergibt.

11. Messverfahren nach Anspruch 10, zum Betrieb der Sensorvorrichtung in einer Druckeinrichtung gemäß Anspruch 9, **dadurch gekennzeichnet, dass** die Mess- und Auswerteeinrichtung (19, 27) eine Sollwert-Kompensation durchführt, die einen aktuellen Druck in dem Medienraum (51), in dem das Sensorelement (11) angebracht ist, und eine aktuelle Temperatur in zumindest einem der Medienräume (51, 53) berücksichtigt.

## Claims

1. A sensor device for detecting flowable media (3, 3'), in particular in the form of fluids (9) which can be received in pressure devices (5) such as pressure containers (7) or pressure lines, said sensor device having at least one sensor element (11) which has an oscillation device (13) which is excited to produce oscillations under the influence of a magnetic field (15) of a field generation device (17), and the oscillation behaviour of which oscillations changes upon the influx of the respective medium (3), the change being able to be detected by a measuring and evaluation device (19, 27), the field generation device (17) being formed by a magnet device (21) and the measuring device (19) being formed by at least one electromagnetic coil (23), the magnetic flux of which, in addition to an electrical voltage in the coil (23), is influenced by the oscillations of the sensor element (11) when said sensor element (11) is excited, and the oscillation device having a metal tongue, **characterised in that** the oscillation device (13) of the sensor element (11) is formed in the manner of a reed switch (33) or reed contact, the reed switch (33) or reed contact being formed from at least two elastic metal tongues (35, 35') which move away from one another as the field strength of the magnet device (21) decreases and are thus excited to produce oscillations, at least one oscillation characteristic, which can be detected by means of the measuring and evaluation device (19, 27), changing upon the influx of the medium (3, 3').

2. The sensor device according to Claim 1, **characterised in that** the elastic metal tongues (35, 35') are soft magnetic.

3. The sensor device according to Claim 1 or 2, **characterised in that** the measuring device (19) is connected to the evaluation device (27) by means of a data transmission path (29), preferably by means of a cable connection or radio link (31).

4. The sensor device according to any of the preceding claims, **characterised in that** the measuring and evaluation device (19, 27) registers the oscillation amplitude and/or the number of oscillations determined by the sensor element (11) above a predeterminable threshold value of an oscillation amplitude, preferably depending on the medium (3, 3') that is to be detected.

5. The sensor device according to any of the preceding claims, **characterised in that** the sensor element (11) has a casing (39), preferably made of a plastic or glass material, having at least one opening (41) for the influx of the media.

6. The sensor device according to any of the preceding claims, **characterised in that** the energy for the operation of the sensor element (11) and/or of the measuring device (19) is obtained
- from an electrical energy source (43), such as an accumulator, for example in the form of a battery, or
- through an inductive coupling of the sensor element (11) and the measuring device (19) with an energy source of the evaluation device (27), or
- from energy of the medium (3) within the pressure device (5), such as from a difference in electrical potentials, from temperature differences, from the relative speed between a sensor element (11) and a flowing medium (3), or from pressure fluctuations in the medium (3).

7. A pressure device, in particular in the form of a pressure container (7) or a pressure line, having a sensor device (1) according to any of the preceding claims in the pressure device, by means of the sensor device (1)
- at least one medium (3) located in the pressure device or no such medium (3), or
- at least one medium (3) present in a media mixture, in particular a solution or a suspension, and/or
- at least one medium flow
being detectable.

8. The pressure device according to Claim 7, **characterised in that** the evaluation device (27) of the sensor device (1) is disposed on the sensor element (11) and/or outside of the pressure device (5), and that the evaluation device (27) is connected to the sensor element (11) thereof with the aid of a data transmission path (29) of the sensor device (1), preferably in the form of a cable connection or radio link (31).

9. The pressure device according to Claim 7 or 8 in the form of a pressure container (7) formed as a hydraulic accumulator (45), in particular as a bellows accumulator, membrane accumulator, piston accumulator or bladder accumulator, having at least one preferably moveable separating element (49) disposed in the accumulator housing (47), which separating element separates two adjacently disposed media chambers (51, 53) within the accumulator housing (47) with different media (3, 3') from one another, in the event of an inadvertent media inflow of at least one of the media (3, 3') into the respective other media chamber (51, 53), the sensor device (1) registering this and signalling this by means of the evaluation device (27), in particular to maintenance or operating personnel.

10. A measuring method for operating the sensor device in a pressure device according to any of Claims 7 to 9, **characterised in that** the reed switch (33) of the sensor device (1) behaves like a mechanical oscillator (55) under the influence of the magnetic field (15) of the field generation device (17), the oscillation behaviour of which changes upon the influx of the respective medium (3, 3') and the change is registered by the measuring device (19) which relays its measured data to the evaluation device (27) for further evaluation.

11. The measuring method according to Claim 10 for operating the sensor device in a pressure device according to Claim 9, **characterised in that** the measuring and evaluation device (19, 27) carries out a nominal value compensation which takes into account a current pressure in the media chamber (51) in which the sensor element (11) is mounted, and a current temperature in at least one of the media chambers (51, 53).

## Revendications

1. Système formant capteur pour détecter des milieux (3, 3') aptes à s'écouler, notamment sous la forme de fluides (9) pouvant être reçus dans des dispositifs (5) sous pression, comme des réservoirs (7) sous pression ou des conduits sous pression, comprenant au moins un élément (11) formant capteur, qui a un dispositif (13) oscillant, mis en oscillation sous l'effet d'un champ (15) magnétique ou d'un dispositif (17) de production d'un champ et dont le comportement oscillant se modifie à l'entrée du milieu (3), la modification pouvant être détectée par un dispositif (19, 27) de mesure et d'exploitation, le dispositif (17) de production d'un champ étant formé par un dispositif (21) magnétique et le dispositif (19) de mesure par au moins une bobine (23) électromagnétique, dont le flux magnétique, outre une tension électrique dans la bobine (23), est, lorsque l'élément (11) formant capteur est excité, influencé par les oscillations de celui-ci, et dans lequel le dispositif oscillant a une languette métallique, **caractérisé en ce que** le dispositif (13) oscillant de l'élément (11) formant capteur est constitué à la manière d'un interrupteur (33) Reed ou d'un contact Reed, l'interrupteur (33) Reed ou le contact Reed étant formé d'au moins deux languettes (35, 35') métalliques élastiques, qui s'éloignent l'une de l'autre au fur et à mesure que l'intensité du champ du dispositif (21) magnétique diminue et qui sont excitées en des oscillations, de telle façon qu'au moins une grandeur caractéristique d'oscillation, qui peut être détectée par le dispositif (19, 27) de mesure et d'exploitation, se modifie à l'entrée du milieu (3, 3').

2. Système formant capteur suivant la revendication 1, **caractérisé en ce que** les languettes (35, 35') métalliques élastiques sont à magnétisme doux.

3. Système formant capteur suivant la revendication 1 ou 2, **caractérisé en ce que** le dispositif (19) de mesure est en liaison avec le dispositif (27) d'exploitation, par une section (29) de transmission de données, de préférence par une liaison (31) par câble ou par une liaison radio.

4. Système formant capteur suivant l'une des revendications précédentes, **caractérisé en ce que** le dispositif (19, 27) de mesure et d'exploitation détecte l'amplitude d'oscillation déterminée par l'élément (11) formant capteur et/ou le nombre d'oscillations au-dessus d'une valeur de seuil, pouvant être prescrite de préférence en fonction du milieu (3, 3') à détecter, d'une amplitude d'oscillation.

5. Système formant capteur suivant l'une des revendications précédentes, **caractérisé en ce que** l'élément (11) formant capteur a une enveloppe (39), de préférence en matière plastique ou en verre, ayant au moins une ouverture (41) pour l'entrée de fluide.

6. Système formant capteur suivant l'une des revendications précédentes, **caractérisé en ce que** l'énergie, pour le fonctionnement de l'élément (11) formant capteur et/ou du dispositif (19) de mesure, est obtenue
- par une source (43) d'énergie électrique, comme un accumulateur, par exemple sous la forme d'une batterie ou
- par un couplage inductif de l'élément formant capteur et du dispositif (19) de mesure à une source d'énergie du dispositif (27) d'exploitation ou
- à partir d'une énergie du milieu (3) dans le dispositif (5) sous pression, comme à partir d'une différence de potentiels électriques, de différences de température, de la vitesse relative entre l'élément (11) formant capteur et le milieu (3) en écoulement ou de fluctuations de pression dans le milieu (3).

7. Dispositif sous pression, notamment sous la forme d'un réservoir (7) sous pression ou d'un conduit sous pression, comprenant un système (1) formant capteur suivant l'une des revendications précédentes dans le dispositif sous pression, dans lequel, au moyen du système (1) formant capteur, on peut détecter
- au moins un milieu (3) se trouvant dans le dispositif sous pression ou qu'il n'y a pas un milieu (3) de ce genre ou
- au moins un milieu (3) présent dans un mélange de milieux, notamment dans une solution ou une suspension et/ou
- au moins un écoulement de milieu.

8. Dispositif sous pression suivant la revendication 7, **caractérisé en ce que** le dispositif (27) d'exploitation du système (1) formant capteur est disposé sur l'élément (11) formant capteur et/ou à l'extérieur du dispositif (5) sous pression et **en ce que** le dispositif (27) d'exploitation est, à l'aide d'une section (29) de transmission de données du système (1) formant capteur, de préférence sous la forme d'une liaison (31) par câble ou d'une liaison (31) radio, relié à son élément (11) formant capteur.

9. Dispositif sous pression suivant la revendication 7 ou 8, sous la forme d'un accumulateur (45) hydraulique, notamment d'un réservoir (7) sous pression, constitué sous la forme d'un accumulateur à soufflet, d'un accumulateur à membrane, d'un accumulateur à piston ou d'un accumulateur à poche, ayant au moins un élément (49) de séparation disposé dans l'enveloppe (47) de l'accumulateur, et de préférence mobile, qui, à l'intérieur de l'enveloppe (47) de l'accumulateur, sépare l'un de l'autre, deux espaces (51, 53) voisins pour du fluide, ayant des fluides (3, 3') différents, dans lequel, s'il se produit une entrée intempestive d'au moins l'un des milieux (3, 3') dans l'autre espace (51, 53) pour des milieux, le système (1) formant capteur le détecte et en averti, par le dispositif (27) d'exploitation, notamment un personnel d'entretien ou de service.

10. Procédé de mesure pour faire fonctionner le système formant capteur dans un dispositif sous pression suivant l'une des revendication 7 à 9, **caractérisé en ce que** l'interrupteur (33) Reed du système (1) formant capteur se comporte, sous l'effet du champ (15) magnétique du dispositif (17) de production de champ, comme un oscillateur (55) mécanique, dont le comportement oscillant se modifie à l'entrée du milieu (3, 3') et la modification est détectée par le dispositif (19) de mesure, qui, pour l'exploitation ultérieure, transmet ses données de mesure au dispositif (27) d'exploitation.

11. Procédé de mesure suivant la revendication 10 pour faire fonctionner le système formant capteur dans un dispositif sous pression suivant la revendication 9, **caractérisé en ce que** le dispositif (19, 27) de mesure et d'exploitation effectue une compensation de valeur de consigne, qui prend en compte une pression instantanée dans l'espace (51) pour des milieux dans lequel est mis l'élément (11) formant capteur, et une température instantanée dans au moins l'un des espaces (51, 53) pour des milieux.
